(19) Europäisches Patentamt
European Patent Office
Office européen des brevets

(11) **EP 4 647 453 A1**

(12) **EUROPÄISCHE PATENTANMELDUNG**

(43) Veröffentlichungstag:
**12.11.2025  Patentblatt 2025/46**

(21) Anmeldenummer: 24174328.5

(22) Anmeldetag: **06.05.2024**

(51) Internationale Patentklassifikation (IPC):
*C08G 18/40* (2006.01)   *C08G 18/42* (2006.01)
*C08G 18/76* (2006.01)

(52) Gemeinsame Patentklassifikation (CPC):
**C08G 18/4018; C08G 18/4252; C08G 18/7664;**
C08G 2110/0025; C08G 2110/005

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG
51373 Leverkusen (DE)**

(72) Erfinder: **Die Erfindernennung liegt noch nicht
vor**

(74) Vertreter: **Levpat
c/o Covestro AG
Gebäude K12
51365 Leverkusen (DE)**

(54) **POLYOLFORMULIERUNGEN UND EIN VERFAHREN ZUR HERSTELLUNG VON PUR/
PIR-HARTSCHAUMSTOFFEN AUF BASIS DIESER POLYOLFORMULIERUNGEN**

(57)    Die vorliegende Erfindung betrifft flammgeschützte Polyolformulierungen enthaltend TCPP, ein
Verfahren zur Herstellung von Polyurethan-/Polyisocya-
nurat-Hartschaumstoffen unter Verwendung dieser Polyolformulierung und die hiermit hergestellten PUR/PIR-
Hartschaumstoffe.

**EP 4 647 453 A1**

**Beschreibung**

Die vorliegende Erfindung betrifft flammgeschützte Polyolformulierungen enthaltend Tris(2-chlorisopropyl) phosphat ("TCPP"), ein Verfahren zur Herstellung von Polyurethan-/Polyisocyanurat-Hartschaumstoffen (im Folgenden auch als "PUR/PIR-Hartschaumstoffe" bezeichnet) unter Verwendung dieser Polyolformulierung und die hiermit hergestellten PUR/PIR-Hartschaumstoffe.

Polyurethan-/Polyisocyanurat-Hartschaumstoffe (im Folgenden auch als "PUR/PIR-Hartschaumstoffe" bezeichnet) werden durch die Umsetzung einer Polyol-haltigen isocyanatreaktiven Komponente mit einem molaren Überschuss an Isocyanaten in Gegenwart eines Treibmittels hergestellt. Sie enthalten neben Urethan - auch Isocyanuratstrukturen und werden insbesondere in flammgeschützten Dämmstoffen verwendet.

In den letzten Jahren ist der Einsatz von halogenierten Phosphorverbindungen, wie insbesondere Tris(2-chlorisopropyl)phosphat (TCPP), unter anderem aus ökologischen Gründen zunehmend in Kritik geraten. Je nach Anforderungsprofil gelingt der vollständige Austausch jedoch nicht in allen Fällen. Aber auch in diesen Schäumen wird versucht, den Gehalt an halogenierten Flammschutzmitteln auf die geringstmögliche Menge zu reduzieren, indem beispielsweise ein Teil des Phosphors aus einem nicht halogenierten Flammschutzmittel (z.B. Triethylphosphat, TEP) stammt und / oder der Polyolformulierung eine funktionalisierte Carbonsäure zugegeben wird.

Der Einsatz von funktionalisierten Carbonsäuren in PIR - Schäumen, u.a. zur Verbesserung der Brandeigenschaften, ist bekannt. In EP 1 288 239 A und EP 1421131 A wird ein Verfahren zur Herstellung von urethanmodifiziertem Polyisocyanurat-Hartschaum offenbart, umfassend den Schritt des Umsetzens eines organischen Polyisocyanats mit einer polyfunktionellen isocyanatreaktiven Komponente in Gegenwart eines Treibmittels und eines Katalysators. Der Prozess ist dadurch gekennzeichnet, dass er in Gegenwart einer funktionalisierten Carbonsäure durchgeführt wird, welche mindestens eine funktionelle OH-, SH-, $NH_2$- oder NHR-Gruppe enthält, worin R eine Alkyl-, Cycloalkyl- oder Arylgruppe ist, also neben der Carbonsäurefunktion noch eine H-acide Gruppe enthält. Als besonders bevorzugt genannt und in den Beispielen verwendet werden Milchsäure und Salicylsäure. Nachteilig an der Verwendung dieser beiden Säuren ist unter anderem, dass sie Feststoffe sind, d.h. dass für die Verarbeitung immer ein Lösungsmittel benötigt wird. WO 2023/208626 A1 setzt Carbonsäureamide oder Amin-haltige Carbonsäuren als Treibmittel in TCPP - haltigen Formulierungen ein.

WO 2022/038056 A offenbart TCPP-haltige isocyanatreaktive Formulierungen, mit denen sich Hartschäume herstellen lassen, die eine geringe Neigung zur Rissbildung in der Kälte aufweisen. Diese Formulierungen weisen jedoch in der PUR/PIR - Reaktion unter anderem kein gleichmäßiges Aufschäumverhalten auf.

Aufgabe der hier geschilderten Erfindung ist es, Reaktionsmischungen für die PUR/PIR-Schaumreaktion zur Verfügung zu stellen, mit denen das Aufschäumverhalten in der PUR/PIR - Schaumreaktion und die Isolationseigenschaften von PUR/PIR - Hartschaumstoffen enthaltend halogenierte flüssige Flammschutzmittel verbessert werden können.

Diese Aufgabe konnte überraschenderweise durch die Verwendung einer Komponente A geeignet zur Umsetzung mit einer Polyisocyanat-Komponente B gelöst werden, welche, bezogen auf das Gesamtgewicht von A, folgende Komponenten enthält:

A1) > 20 Gew.-%, bevorzugt 45 - 90 Gew.-% (besonders bevorzugt 50 - 80 Gew.-%) eine oder mehrere Polyolverbindungen ausgewählt aus der Gruppe bestehend aus Polyesterpolyolen und / oder Polyetheresterpolyolen mit einer mittleren Hydroxylzahl von 150 mg KOH/g bis ≤ 300 mg KOH/g und einer mittleren Funktionalität von 1,8 bis 2,5, wobei mindestens 50 Gew.-% der Polyolverbindungen A1) ausgewählt sind aus der Gruppe bestehend aus aromatischen Polyesterpolyolen, aromatisch/aliphatischen Polyesterpolyolen, aromatischen Polyetheresterpolyolen und aromatisch/aliphatischen Polyetheresterpolyolen,

A2) 0,0 - 3,0 Gew.-% (bevorzugt 1,0 - 2,0, insbesondere bevorzugt 1,2 - 2,0 Gew.-%) einer Polyolkomponente bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;

A3) 5,0 - 15 Gew.-% (bevorzugt 7,0 - 12 Gew.-%) einer Polyolkomponente bestehend aus einem oder mehreren Polyolen ausgewählt aus Polyetherpolyolen mit einer OH-Zahl von 10 bis 80 KOH/g und einer mittleren Funktionalität von ≥ 2,0 bis ≤ 3,0, hergestellt durch Alkoxylierung einer geeigneten Starterkomponente,

A4) 0,0 - 7,5 Gew.-% (insbesondere bevorzugt 0 - 5 Gew.-%) einer Polyolkomponente bestehend aus einem oder mehreren Polyolen ausgewählt aus Polyetherpolyolen mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid,

**A5)** optional eine Säurekomponente ausgewählt aus der Gruppe bestehend aus Verbindungen mit einer oder mehreren freien Carbonsäurefunktionen,

**A6)** optional weitere isocyanatreaktive Verbindungen, insbesondere niedermolekulare Verbindungen (Kettenverlängerer und / oder Vernetzer), welche nicht unter die Definition einer der Komponenten A1 - A5 fallen,

**A7)** 0,2 - 1,2 Gew.-% bevorzugt 0,3 - 1,0 Gew.-% Wasser,

**A8)** > 0 Gew.-%, bevorzugt 5 - 30 Gew.-%, besonders bevorzugt 8 - 25 Gew.-% und insbesondere bevorzugt 10 - 20 Gew.-%, Flammschutzmittel umfassend Tris(2-chlorisopropyl)phosphat,

**A9)** optional Katalysatoren,

**A10)** optional weitere Hilfsmittel und Zusatzstoffe,

dadurch gekennzeichnet, dass A eine mittlere Säurezahl von 1,5 - 3,3 , insbesondere 2 - 3 mg KOH/g aufweist [DIN EN ISO 2114 (November 2006)].

Die OH-Zahl (auch: Hydroxylzahl) gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete, mittlere Funktionalität (Anzahl an gegenüber Isocyanaten bzw. gegenüber Polyolen reaktiven Funktionen im Molekül).

Die Säurezahl wird bestimmt gemäß DIN EN ISO 2114 (November 2006).

Der NCO-Wert (auch: NCO-Gehalt, Isocyanatgehalt) wird bestimmt mittels EN ISO 11909 (Mai 2007).

Die "Viskosität" bzw. "dynamische Viskosität" bezeichnet im Rahmen der vorliegenden Erfindung die dynamische Viskosität, welche bestimmt werden kann entsprechend DIN 53019-1 (September 2008).

Im Sinne dieser Anmeldung kann es sich bei "einem Polyesterpolyol" auch um eine Mischung unterschiedlicher Polyesterpolyole handeln, wobei in diesem Fall die Mischung der Polyesterpolyole als gesamtes die genannte OH-Zahl aufweist. Analog gilt dies für die weiteren hier aufgeführten Polyole und Komponenten.

Die Polyesterpolyole, die für die Komponente A1) verwendet werden, sind unter anderem Polykondensate aus Di- sowie weiterhin Tri-, und Tetraolen und Di- sowie weiterhin Tri- und Tetracarbonsäuren oder Hydroxycarbonsäuren oder Lactonen, bevorzugt werden aromatische Dicarbonsäuren oder Gemische aus aromatischen und aliphatischen Dicarbonsäuren verwendet. Unter "aromatischen Polyestern" versteht man dabei solche Polyester, zu deren Herstellung nur Polycarbonsäuren eingesetzt werden, welche einen aromatischen Anteil aufweisen. Unter "aromatisch/aliphatischen Polyestern" werden solche Polyester verstanden, zu deren Herstellung aromatische und aliphatische Polycarbonsäuren eingesetzt werden. Dies gilt analog auch für die unten beschriebenen Polyetheresterpolyole. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Als aromatische Polycarbonsäuren können beispielsweise Phthalsäure, Isophthalsäure, Terephthalsäure, Trimellithsäure, Trimesinsäure (1,3,5-Benzoltricarbonsäure), Pyromellithsäure und/oder Derivate der Terephthalsäure, wie beispielsweise Polyalkylenterephthalate eingesetzt werden, insbesondere Phthalsäure und /oder Terephthalsäure und ihre Isomere und Derivate.

Beispiele für aliphatische Polycarbonsäuren sind Cyclohexandicarbonsäure, Endomethylentetrahydrophthalsäure, Adipinsäure, Azelainsäure, Sebacinsäure, Glutarsäure, Maleinsäure, Fumarsäure, Itaconsäure, Korksäure, Bernsteinsäure, 2-Methylbernsteinsäure, 3,3-Diethylglutarsäure, 2,2-Dimethylbernsteinsäure, Dodekandisäure, Dimerfettsäure, Trimerfettsäure und/oder Zitronensäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Rizinolsäure, Hydroxystearinsäure und dergleichen. Geeignete Lactone sind unter anderem Caprolacton, Butyrolacton und Homologe. In einer bevorzugten Ausführungsform werden keine Hydroxycarbonsäuren und / oder deren Derivate eingesetzt.

Verwendet werden können ebenso Derivate dieser Carbonsäuren, wie beispielsweise Dimethylterephthalat.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxylmodifizierte Öle, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure und Ölsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren. Der anteilige Einsatz der oben genannten biobasierten Ausgangsstoffe, insbesondere von Fettsäuren bzw. Fettsäurederivaten (Ölsäure, Sojaöl etc.) kann Vorteile aufweisen, z.B. im Hinblick auf Lagerstabilität der Polyolformulierung, Dimensionsstabilität, Brandverhalten und Druckfestigkeit der Schäume.

Die Carbonsäuren können dabei sowohl einzeln als auch im Gemisch verwendet werden. Als Carbonsäuren werden bevorzugt Phthalsäureanhydrid, Terephthalsäure und/oder Isophthalsäure sowie Adipinsäure, Glutarsäure, Sebacinsäure und/oder Bernsteinsäure, und deren Mischungen verwendet.

Die Carbonsäuren werden für die Polyestersynthese mit Polyhydroxyverbindungen, insbesondere Diolen, Triolen und / oder Tetraolen umgesetzt.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere und Neopentylglykol. Vorzugsweise verwendet werden Ethylenglykol, Diethylenglykol und/oder Polyethylenglykole.

Daneben können auch Polyhydroxyverbindungen wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind. Es können zusätzlich auch einwertige Alkanole mit verwendet werden.

Verwendbare Polyetheresterpolyole sind solche Verbindungen, die Ethergruppen, Estergruppen und OH-Gruppen enthalten.

Als Komponenten für die Polyetheresterpolyolherstellung werden ebenfalls bevorzugt die oben beschriebenen ein - und mehrwertigen Carbonsäuren und Alkohole bzw. deren reaktiven Derivate eingesetzt.

Zusätzlich werden als weitere Komponente zur Herstellung der Polyetheresterpolyole Polyetherpolyole eingesetzt, die man beispielsweise durch Alkoxylieren von Startermolekülen wie mehrwertigen Alkoholen (im Folgenden auch mit "Polyhydroxyverbindungen" bezeichnet) erhält. Die Startermoleküle sind mindestens difunktionell, können aber gegebenenfalls auch Anteile höherfunktioneller, insbesondere trifunktioneller, Startermoleküle enthalten. Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Polyethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel die Polyhydroxyverbindungen 1,1,1-Trimethylolpropan, Triethanolamin, Glycerin, Sorbitan, Sorbitol und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid. Die Herstellungsverfahren von Poly(ether)esterpolyolen sind dem Fachmann bekannt.

In einer bevorzugten Ausführungsform werden für die Herstellung der Polyesterpolyole bzw. Polyetheresterpolyole rezyklierte Ausgangsstoffe eingesetzt, beispielsweise rezykliertes Polyethylenterephthalat ("rPET"). Insbesondere kann die Komponente A1 ein Polyesterpolyol enthalten, welches aus rezykliertem Polyethylenterephthalat hergestellt ist.

Im Weiteren werden Polyesterpolyole und Polyetheresterpolyole einzeln oder gemeinsam auch mit dem Begriff "Poly(ether)esterpolyole" bezeichnet.

Die Komponente A1 umfasst mindestens 50 Gew.-% aromatisches oder aromatisch/aliphatisches Poly(ether) esterpolyol. Dies bedeutet, dass die Komponente A1 einen aromatischen Anteil aufweist. In einer bevorzugten Ausführungsform sind mehr als 60 Gew.-% der Komponente A1 aromatische oder aromatisch/aliphatische Polyesterpolyole und/oder Polyetheresterpolyole, insbesondere mehr als 80 Gew.-%, und ganz besonders bevorzugt besteht die Komponente A1 aus aromatischen und/oder aromatisch/aliphatischen Polyesterpolyolen und/oder Polyetheresterpolyolen.

Die Polyole der Komponente A1 weisen mittlere Funktionalitäten von ≥ 1,8 bis ≤ 2,5, und eine Hydroxylzahl zwischen 150 bis 300 mg KOH/g, besonders bevorzugt 160 bis 270 mg KOH/g und insbesondere bevorzugt von 180 - 260 mg KOH/g auf.

Die Säurezahl der Komponente A1 ist beispielsweise < 5 mg KOH/g, vorzugsweise < 3 mg KOH/g. Vorzugsweise besitzen die Polyole mehr als 70 mol%, bevorzugt mehr als 80 mol%, insbesondere mehr als 90 mol%, primäre OH-Gruppen.

Die Komponente A kann weiterhin bis 3,0 Gew.-% der Polyesterkomponente A2, welche ausgewählt ist aus Polyesterpolyolen mit einer OH-Zahl im Bereich von 600 - 900 mg KOH/g, insbesondere von 750 - 850 mg KOH/g, enthalten. Bevorzugt enthält Komponente A 1,0 - 2,0, insbesondere bevorzugt 1,2 - 2,0 Gew.-% an Komponente A2. In einer bevorzugten Ausführungsform weist die Komponente A2 eine mittlere Säurezahl von 10 bis 400 mg KOH/g, bevorzugt von 20 bis 250 mg KOH/g, insbesondere bevorzugt von 50 bis 150 mg KOH/g auf.

Die Komponente A enthält weiterhin 5,0 - 15 Gew.-%, bevorzugt 7,0 - 12 Gew.-%, einer Polyolkomponente A3 bestehend aus einem oder mehreren Polyolen ausgewählt aus Polyetherpolyolen mit einer OH-Zahl von 10 bis 80 KOH/g und einer mittleren Funktionalität von $\geq 2,0$ bis $\leq 3,0$, hergestellt durch Alkoxylierung einer geeigneten Starterkomponente.

Die Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Die Startermoleküle sind mindestens difunktionell, können aber gegebenenfalls auch Anteile höherfunktioneller, insbesondere trifunktioneller, Startermoleküle enthalten. Startermoleküle sind zum Beispiel Diole mit zahlenmittleren Molekulargewichten $M_n$ von vorzugsweise $\geq 18$ g/mol bis $400 \leq$ g/mol, bevorzugt von $\geq 62$ g/mol bis $200 \leq$ g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Gegebenenfalls können auch Wasser, organische Dicarbonsäuren, wie Bernsteinsäure, Adipinsäure, Phthalsäure und Terephthalsäure, Triethanolamin, Bisphenole, Glycerin, Trimethylolpropan, Pentaerythrit, Sorbit und Saccharose. aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan anteilig eingesetzt werden. Vorzugsweise verwendet werden Ethandiol, 1,2- und 1,3-Propandiol, Diethylenglykol, Dipropylenglykol, 1,4-Butandiol und 1,6-Hexandiol.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid oder eine Mischung aus Ethylenoxid (EO) und Propylenoxid (PO), insbesondere mit einem EO-Gehalt von 15 - 70 Gew.%, bevorzugt 15 - 50 Gew.-%, bezogen auf die Gesamtmenge von EO und PO. Die Alkylenoxide können auch in Kombination mit $CO_2$ umgesetzt werden.

Weiterhin kann die Komponente A bis zu 7,5 Gew.-% (insbesondere bevorzugt 0 - 5 Gew.-%) einer Polyolkomponente A4 bestehend aus einem oder mehreren Polyolen ausgewählt aus Polyetherpolyolen mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid, enthalten. Bevorzugte aromatische Amine werden ausgewählt aus der Gruppe bestehend aus Toluylendiamin, Diaminodiphenylmethan und Polymethylen-polyphenylen-polyamin. Als Alkylenoxid kann bevorzugt Ethylenoxid, Propylenoxid oder ein Gemisch davon verwendet werden. Ethylenoxid ist besonders bevorzugt. Die durchschnittliche Funktionalität dieses Polyetherpolyols A4 ist bevorzugt 4.

Das gewichtsmittlere Molekulargewicht der Polyetherpolyole A4 liegt vorzugsweise im Bereich zwischen 400 g/mol und 700 g/mol, besonders bevorzugt im Bereich zwischen 500 g/mol und 600 g/mol.

Die Polyetherpolyole A4 werden nach bekannten Verfahren hergestellt, wie beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines aromatischen Amins als Startermolekül mit einem oder mehreren Alkylenoxiden mit 2 bis 4 Kohlenstoffatomen im Alkylenrest.

Lässt sich die Säurezahl der Komponente A nicht bereits über die Säurezahl der Poly(ether)esterpolyole einstellen, kann dies durch Zugabe einer Säurekomponente A5 geschehen. Die Säurekomponente A5 umfasst Verbindungen mit freien Carbonsäurefunktionen. Beispielsweise können die mehrwertigen Carbonsäuren eingesetzt werden, die auch für die Poly(ether)estersynthese eingesetzt werden, einwertige und / oder funktionalisierte Carbonsäuren, z.B. Ameisensäure, Essigsäure, Propionsäure, Buttersäure, Valeriansäure, Capronsäure, Enanthsäure, Caprylsäure, Pelargonsäure, Caprinsäure, Undecansäure, Laurinsäure, Tridecansäure, Myristinsäure, Pentadecansäure, Palmitinsäure, Stearinsäure, Arachinsäure, Behensäure, Ölsäure, Linolsäure, Linolensäure, Arachidonsäure, Oxalsäure, Malonsäure, 2,2-Dimethylpropionsäure, Glutarsäure, Bernsteinsäure, Adipinsäure, Glycolsäure, Milchsäure, Brenztraubensäure, Glyoxylsäure, Toluolsäuren, Phthalsäure, Isophthalsäure, Terephthalsäure, Salicylsäure, Anthranilsäure, Benzoesäure, m-Aminobenzoesäure, p-Aminobenzoesäure, o-Chlorbenzoesäure, m-Chlorbenzoesäure, p-Chlorbenzoesäure, o-Nitrobenzoesäure, m-Nitrobenzoesäure und / oder p-Nitrobenzoesäure. Natürlich können auch die oben genannten Fettsäuren, hydroxylmodifizierte und epoxidierte Fettsäuren und (sauren) Fettsäureester eingesetzt werden, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure.

A5 kann auch ester-haltige Carbonsäuren umfassen, wenn sie noch freie Carbonsäurefunktionen aufweisen (Halbester). Als Ausgangsprodukte zur Herstellung solcher Halbester kommen grundsätzlich die bereits unter A1 beschriebenen mehrwertigen Carbonsäuren und Alkohole bzw. deren Derivate in Betracht, welche so eingesetzt werden, dass die Säurefunktionen nicht vollständig umgesetzt werden.

Dies sind z.B. Diole, Triole oder Polyole, z.B. Ethylenglykol, Diethylenglykol, Triethylenglykol, Tetraethylenglykol, Polyethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol und Polybutylenglykole. Die eingesetzten Alkohole sind bevorzugt frei von weiteren funktionellen Gruppen, insbesondere enthalten sie keine N-haltigen Gruppen wie $NH_2$-, NHR- oder $NR_2$-Gruppen. Bevorzugt sind Ethylenglykol, Diethylenglykol, Triethylenglykol, Tetraethylenglykol, Polyethylenglykol, 1,2-Propandiol, Dipropylenglykol und Polypropylenglykol, insbesondere bevorzugt Ethylenglykol, Diethylenglykol, Triethylenglykol und Polyethylenglykol und ganz besonders bevorzugt Diethylenglykol und Polyethylenglykol.

Zur Herstellung der Halbester werden insbesondere aromatische Dicarbonsäuren oder Gemische aus aromatischen und aliphatischen Dicarbonsäuren und/oder deren Anhydride eingesetzt. Die eingesetzten Polycarbonsäuren und -anhydride weisen bevorzugt keine funktionelle Gruppen ausgewählt aus der Gruppe bestehend aus OH-, SH-, $NH_2$- oder NHR-Gruppen, worin R eine Alkyl, Cycloalkyl- oder Arylgruppe ist, auf. Insbesonders bevorzugt handelt es sich bei der Polycarbonsäure um Bernsteinsäure, Adipinsäure, Phthalsäure und / oder Terephthalsäure. Besonders geeignete Carbonsäureanhydride sind z.B. Maleinsäureanhydrid, Bernsteinsäureanhydrid, Octenylbernsteinsäureanhydrid, Itaconsäureanhydrid, Citraconsäureanhydrid, Diglycolsäureanhydrid, Hexahydrophthalsäureanhydrid, Endomethylen-tetrahydro-phthalsäureanhydrid, Trimellitsäureanhydrid, Hemimellitsäureanhydrid, Pyromellitsäureanhydrid, Mellitsäureanhydrid und / oder Phthalsäureanhydrid, insbesondere um Maleinsäureanhydrid oder Phthalsäureanhydrid.

Ganz besonders bevorzugt enthält die Komponente A5 ein Umsetzungsprodukt aus Maleinsäureanhydrid und / oder Phthalsäureanhydrid mit Ethylenglykol und / oder Diethylenglykol und / oder Polyethylenglykolen, insbesondere ein Reaktionsprodukt aus Phthalsäureanhydrid mit Diethylenglykol.

Esterhaltige Verbindungen, die bereits unter eine der unter Definitionen von A1 oder A2 fallen, sind aus der Definition von A5 ausgenommen.

Die Komponente A soll eine mittlere Säurezahl von 1,5 - 3,3 , insbesondere 2 - 3 mg KOH/g aufweisen. Falls notwendig, wird die Säurezahl bevorzugt mit einer Carbonsäure ausgewählt aus Ameisensäure, Essigsäure, Ölsäure, einem Halbester und / oder Milchsäure eingestellt. Die Komponente enthält bevorzugt 0 - 5 Gew.-%, insbesondere bevorzugt 0 - 3 Gew.-% einer Komponente A5.

Neben den oben beschriebenen Polyolen und isocyanatreaktiven Verbindungen können in der Komponente A weitere isocyanatreaktive Verbindungen (A6) enthalten sein.

Hierzu gehören zum einen niedermolekulare isocyanatreaktive Verbindungen, z.B. di- oder trifunktionelle Amine und Alkohole, besonders bevorzugt Diole und/oder Triole mit Molmassen kleiner als 400 g/mol, vorzugsweise von 60 bis 300 g/mol, z.B. Triethanolamin, Diethylenglykol, Ethylenglykol und Glycerin. Sofern zur Herstellung der Polyurethan-Hartschaumstoffe solche niedermolekularen isocyanatreaktiven Verbindungen Anwendung finden, z.B. in der Funktion als Kettenverlängerungsmittel und/oder Vernetzungsmittel kommen diese zweckmäßigerweise in einer Menge von bis zu 5 Gew.-%, bezogen auf das Gesamtgewicht der Komponente A1, zum Einsatz.

Die Komponente A kann auch weitere isocyanatreaktive Verbindungen enthalten, beispielsweise Graft-Polyole, Polyamine, Polyaminoalkohole und Polythiole Selbstverständlich umfassen die beschriebenen isocyanatreaktiven Komponenten auch solche Verbindungen mit gemischten Funktionalitäten.

Bevorzugt umfassen die in Komponente A eingesetzten Polyolverbindungen mindestens 50 Gew.-% an aromatischen oder aromatisch/aliphatischen Polyolen, insbesondere 50 Gew.-%, besonders bevorzugt 60 Gew.-% und ganz besonders bevorzugt 65 - 75 Gew.-% aromatische oder aromatisch/aliphatische Polyesterpolyole und/oder Polyetheresterpolyole. In diesem Bereich weist die Reaktionsmischung eine gute Kombination aus Verarbeitungs- und Brandeigenschaften auf.

Als Katalysator A9 zur Herstellung der PUR/PIR-Hartschaumstoffe werden Verbindungen verwendet, welche die Reaktion der reaktiven Wasserstoffatome, insbesondere Hydroxylgruppen enthaltenden Verbindungen mit der Polyisocyanatkomponente B beschleunigen, wie z. B. tertiäre Amine oder Metallsalze. Die Katalysatorkomponenten können dem Reaktionsgemisch aus Komponente A und Komponente B zudosiert oder auch ganz oder teilweise in der Komponente A vorgelegt werden.

Verwendet werden beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethylimidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N''-Tris-(dialkylaminoalkyl)hexahydrotriazin, z.B. N,N',N''-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysatorverbindungen kommen ferner in Betracht: Amidine, wie z. B. 2,3-Dimethyl-3,4,5,6-tetrahydropyrimidin, Tetraalkylammoniumhydroxide, wie z. B. Tetramethylammoniumhydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die Komponente enthält bevorzugt 0 - 5 Gew.-%, insbesondere bevorzugt 0 - 3 Gew.-% einer Komponente A9.

Die oben genannten Katalysatoren können alleine oder in Kombination miteinander eingesetzt werden.

Wasser ist häufig bereits in den Ausgangsstoffen als Restfeuchte vorhanden. Darüber hinaus werden der Komponente A noch 0,2 - 1,2 Gew.-%, in einer bevorzugten Ausführungsform 0,3 - 1,0 Gew.-%, Wasser zugesetzt. Wasser wirkt als chemisches Treibmittel. Die Komponente A enthält maximal 1,3 Gew.% Wasser.

Die Komponente A enthält weiterhin > 0 Gew.-%, bevorzugt 5 - 30 Gew.-%, besonders bevorzugt 8 - 25 Gew.-% und insbesondere bevorzugt 10 - 20 Gew.-%, Flammschutzmittel A8 umfassend Tris(2-chlorisopropyl)phosphat (TCPP). Zusätzlich zu TCPP ist bevorzugt ein bei 25 °C flüssiges, halogenfreies und phosphorhaltiges Flammschutzmittel enthalten. Dies umfasst beispielsweise halogenfreie Phosphate wie z. B. Triethylphosphat (TEP), Trikresylphosphat, Diphenylkresyl-phosphat (DPK), tert-Butylphenyldiphenylphosphat, Resorcinyldiphenylphosphat (auch als Oligomer), sowie polymere Reaktionsprodukte aus Phosphorylchlorid mit Alkoholen, z.B. mit Diethylenglykol und Isobutanol (Levagard 3000), und Phosphonate, z.B. Diethylethylphosphonat (DEEP), Dimethylpropylphosphonat (DMPP), Veriquel® R100 bzw. "E06-16" von der Fa. ICL, und auch gemischte Phosphonate wie Ethylbutylhydroxymethylphosphonat. Besonders bevorzugt ist die Verwendung von TCPP alleine oder in Abmischung mit TEP in einem TCPP:TEP Verhältnis von 1:10 - 1:1.

Gegebenenfalls können ein oder mehrere Hilfs- und Zusatzstoffe (Additive) als Komponente A10 eingesetzt werden. Beispiele für die Komponente A10 sind oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen. Hilfs- und Zusatzstoffe A10 kommen zweckmäßiger Weise in einer Menge von maximal 10 Gew.-%, insbesondere von 0 - 6 Gew.-%, bezogen auf das Gesamtgewicht der Komponente A1, zum Einsatz.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Sepiolit, Hornblenden, Amphibole, Chrisotil, Montmorillonit und Talkum, Metalloxide, wie Kaolin, Aluminiumoxide, Titanoxide und Eisenoxide, Metallsalze, wie Kreide, Huntit, Schwerspat und anorganische Pigmente, wie Magnetit, Goethit, Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern. Bevorzugt werden keine Füllstoffe verwendet.

In einer bevorzugten Ausführungsform enthält die Komponente A bezogen auf das Gesamtgewicht von A:

A1) > 20 Gew.-% (bevorzugt 45 - 90 Gew.-%, besonders bevorzugt 50 - 80 Gew.-%) eine oder mehrere Polyolverbindungen ausgewählt aus der Gruppe bestehend aus Polyesterpolyolen und / oder Polyetheresterpolyolen mit einer mittleren Hydroxylzahl von 150 mg KOH/g bis ≤ 300 mg KOH/g und einer mittleren Funktionalität von 1,8 bis 2,5, wobei mindestens 50 Gew.-% der Polyolverbindungen A1) ausgewählt sind aus der Gruppe bestehend aus aromatischen Polyesterpolyolen, aromatisch/aliphatischen Polyesterpolyolen, aromatischen Polyetheresterpolyolen und aromatisch/aliphatischen Polyetheresterpolyolen,

A2) 0,0 - 3,0 Gew.-% (bevorzugt 1,0 - 2,0, insbesondere bevorzugt 1,2 - 2,0 Gew.-%) einer Polyolkomponente bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;

A3) 5,0 - 15 Gew.-% (bevorzugt 7,0 - 12 Gew.-%) einer Polyolkomponente bestehend aus einem oder mehreren Polyolen ausgewählt aus Polyetherpolyolen mit einer OH-Zahl von 10 bis 80 KOH/g und einer mittleren Funktionalität von ≥ 2,0 bis ≤ 3,0, hergestellt durch Alkoxylierung einer geeigneten Starterkomponente,

A4) 0,0 - 7,5 Gew.-% (insbesondere bevorzugt 0 - 5 Gew.-%) einer Polyolkomponente bestehend aus einem oder mehreren Polyolen ausgewählt aus Polyetherpolyolen mit einer OH-Zahl im Bereich von 350 - 500 mg KOH/g, insbesondere von 390 - 440 mg KOH/g, hergestellt durch Alkoxylierung eines aromatischen Amins mit mindestens einem Alkylenoxid,

A5) 0,0 - 5,0 Gew.-% eine Säurekomponente ausgewählt aus der Gruppe bestehend aus Verbindungen mit einer oder mehreren freien Carbonsäurefunktionen,

A6) 0,0 - 5,0 Gew.-% weitere isocyanatreaktive Verbindungen, insbesondere niedermolekulare Verbindungen (Kettenverlängerer und / oder Vernetzer), welche nicht unter die Definition einer der Komponenten A1 - A5 fallen,

A7) 0,2 - 1,2 Gew.-%, bevorzugt 0,3 - 1,0 Gew.-% Wasser,

A8) > 0 Gew.-%, bevorzugt 5 - 30 Gew.-%, besonders bevorzugt 8 - 25 Gew.-% und insbesondere bevorzugt 10 - 20 Gew.-%, Flammschutzmittel umfassend Tris(2-chlorisopropyl)phosphat (TCPP),

A9) 0,0 - 5,0 Gew.-% Katalysatoren,

A10) 0,0 - 10,0 Gew.-% (bevorzugt 0,0 - 6 Gew.-%) weitere Hilfsmittel und Zusatzstoffe.

Die isocyanatreaktive Komponente A ist bevorzugt im Wesentlichen auf die oben beschriebenen Komponenten A1) - A10) beschränkt. "Im Wesentlichen" bedeutet hierbei im Sinne dieser Anmeldung, dass weitere Komponenten, z.B. technische Verunreinigungen, andere reaktive oder nicht reaktive Verbindungen, Lösungsmittel oder ähnliches maximal in einem Gehalt von bis zu 10 Gew.-%, bevorzugt maximal bis zu 5 Gew.-%, insbesondere maximal bis zu 2 Gew.-% enthalten sind.

Die Erfindung betrifft ebenfalls ein Reaktionsgemisch, welches aus der Komponente A und einer Polyisocyanatkomponente B hergestellt wird. Die Kennzahl des Reaktionsgemisches kann 90 - 600 betragen, zur Herstellung von PIR-haltigen Schaumstoffen beträgt sie > 150, insbesondere > 180, bevorzugt > 220, in einer ganz besonders bevorzugten Ausführungsform beträgt die Kennzahl 290 - 440.

Für die Herstellung von PUR/PIR-Hartschäumen wird das Reaktionsgemisch in Gegenwart von

C Treibmitteln, insbesondere enthaltend eine oder mehrere Verbindungen ausgewählt aus der Gruppe bestehend aus halogenfreien physikalischen Treibmitteln und (hydro)fluorierten Olefinen,
umgesetzt.

Die Erfindung betrifft ebenfalls ein Verfahren zur Umsetzung der erfindungsgemäßen isocyanatreaktiven Komponente A mit

B einer Polyisocyanatkomponente
in Gegenwart von

C Treibmitteln, enthaltend eine oder mehrere Verbindungen ausgewählt aus der Gruppe bestehend aus halogenfreien physikalischen Treibmitteln und (hydro)fluorierten Olefinen,
zu PUR/PIR-Hartschaumstoffen.

Als geeignete Polyisocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (monomeres MDI) und/oder höhere Homologe (oligomeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Mischungen aus oligomerem und gegebenenfalls monomerem MDI werden auch "polymeres MDI" genannt. Bevorzugt wird die Polyisocyanatkomponente **B** ausgewählt aus mindestens einer Verbindung aus der Gruppe bestehend aus polymerem MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Polyisocyanatkomponente **B** eingesetzt werden. Die Präpolymere sind herstellbar durch Umsetzung eines oder mehrerer Polyisocyanate mit einem oder mehreren Polyolen, entsprechend den unter den isocyanatreaktiven Komponenten **A** beschriebenen Polyolen.

Die Herstellung der erfindungsgemäßen PUR/PIR-Hartschaumstoffe erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden.

Das Treibmittel C kann einer der Komponenten A oder B, insbesondere A, zudosiert werden oder bei der Vermischung zugegeben werden. Als Treibmittel wird mindestens eine Verbindung, ausgewählt aus der Gruppe bestehend aus physikalischen und chemischen Treibmitteln, eingesetzt.

Physikalische Treibmittel C sind beispielsweise niedrig siedende organische Verbindungen, wie z.B. Kohlenwasserstoffe, Ether, Ketone, Carbonsäureester oder Kohlensäureester. Geeignet sind insbesondere organische Verbindungen, welche gegenüber der Polyisocyanatkomponente B inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und. Auch möglich, aber nicht bevorzugt, ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl) pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

In einer bevorzugten Ausführungsform wird eine Mischung aus Wasser und einem physikalischen Treibmittel eingesetzt. Bevorzugt werden keine halogenierten Treibmittel eingesetzt.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an isocyanatreaktiven Gruppen, multipliziert mit 100, verstanden:

$$\text{Kennzahl} = (\text{Mole Isocyanat-Gruppen} / \text{Mole isocyanatreaktive Gruppen}) * 100$$

In dem erfindungsgemäßen Verfahren wird bevorzugt eine Kennzahl in einem Bereich von $\geq 180$ eingesetzt, insbesondere in einem Bereich von $\geq 220$. Die PIR-Strukturen führen zu einer höheren Flammwidrigkeit des Schaums selbst. In einer mehr bevorzugten Ausführungsform liegt die Kennzahl des Reaktionsgemischs bei 240 - 440, in einer ganz besonders bevorzugten Ausführungsform beträgt die Kennzahl 290 - 440.

Die Erfindung betrifft ebenfalls einen PUR/PIR-Hartschaumstoff, der durch das erfindungsgemäße Verfahren hergestellt ist. Die erfindungsgemäßen PUR/PIR-Hartschaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Der erfindungsgemäße PUR/PIR-Hartschaumstoff weist insbesondere eine Rohdichte von $\leq 45$ kg/m$^3$ auf (bestimmt gemäß DIN EN ISO 3386-1 (Oktober 2015)).

Ein weiterer Gegenstand der Erfindung ist demzufolge die Verwendung eines erfindungsgemäßen PUR/PIR-Hartschaumstoffes als Isolationsschaumstoff und/oder als Haftvermittler in Verbundelementen, wobei die Verbundelemente eine einen erfindungsgemäßen PUR/PIR-Hartschaumstoff umfassende Schicht und mindestens eine Deckschicht umfassen. Die Deckschicht wird hierbei zumindest teilweise von einer den erfindungsgemäßen PUR/PIR-Hartschaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln. Insbesondere handelt es sich bei mindestens einer Deckschicht um eine Deckschicht aus Metall (Metallverbundelement).

Die PUR/PIR - Hartschaumstoffe, hergestellt durch Umsetzung der erfindungsgemäßen Komponente aus Polyesterkomponente A1, Polyetherkomponente A3 und TCPP, gekennzeichnet dadurch, dass sie eine bestimmte Menge an Wasser enthält und eine Säurezahl von 1,5 - 3 aufweist, zeigen eine gute Wärmeleitfähigkeit und lassen sich mit einem sehr gleichmäßigen Aufschäumverhalten herstellen.

## **Beispiele**

1. Methoden und Begriffe

OH-Zahl: Die Bestimmung der OH-Zahl (Hydroxylzahl) erfolgte gemäß der Vorschrift der DIN 53240-1 (Verfahren ohne Katalysator, Juni 2013).

Säurezahl: Die Bestimmung der Säurezahl erfolgte gemäß DIN EN ISO 2114 (November 2006).

Viskosität: Dynamische Viskosität wird gemessen mit einem Rheometer MCR 51 der Firma Anton Paar entsprechend DIN 53019-1 (September 2008) mit einem Messkegel CP 50-1, Durchmesser 50 mm, Winkel 1° bei Scherraten von 25, 100, 200 und 500 s$^{-1}$.

Kennzahl: Bezeichnet das mit 100 multiplizierte molare Verhältnis von NCO- zu NCO-reaktiven Gruppen einer Rezeptur

Rohdichte: Die Rohdichte wurde gemäß DIN EN ISO 3386-1 (Oktober 2015) bestimmt.

Maximale Flammhöhe: Die maximale mittlere Flammhöhe wurde nach DIN EN ISO 11925-2 (Februar 2020) bestimmt.

Wärmeleitfähigkeit: Die Wärmeleitfähigkeit wurde gemäß DIN 52612-2 bei einer Temperatur von 10 °C bestimmt.

Beurteilung des Aufschäumverhaltens / Messung der Steiggeschwindigkeit: Zur Untersuchung der Fließeigenschaften der Schäume wurde das Reaktionsgefäß nach dem Rührvorgang mit einer für diese Methode normierten Menge des Reaktionsgemisches (265 g) in ein beheizbares Steigrohr (HSR, Hartschaumsteigrohr) mit der Höhe von 150 cm und dem Innendurchmesser von 9,1 cm eingebracht. Die Temperatur des Steigrohrs lag bei 35 °C Die Steighöhe und der Druck wurden in Abhängigkeit der Zeit detektiert und gemäß des jeweils vorherrschenden Luftdrucks auf einen Standarddruck von 1013 mbar korrigiert.. Beurteilt wird das Fließverhalten durch die Ausprägung eines zweiten Peaks in der Fließgeschwindigkeit ("PIR Peak"). Als Maß für ein gutes Fließverhalten wird die Differenz zwischen der maximalen ($v_{max}$) und der minimalen Steiggeschwindigkeit ($v_{min}$) (lokales Minimum nach Beginn des Aufschäumprozess und vor dem Erreichen des zweiten PIR Peaks) in der Fließkurve beurteilt. Vorteilhaftes Fließverhalten ist hierbei eine möglichst niedrige Differenz, d.h. ein gleichmäßiges Aufschäumverhalten.

2. Materialien

| Polyesterpolyol A1-1 | Polyesterpolyol der Fa. Covestro Deutschland AG auf Basis von Phthalsäureanhydrid, Adipinsäure, Ethylenglykol und Diethylenglykol mit einer OH-Zahl von 240 mg KOH/g |
| Polyesterpolyol A2-1 | Polyesterpolyol der Fa. Covestro Deutschland AG auf Basis von Phthalsäureanhydrid und Diethylenglykol mit einer OH-Zahl von 795 mg KOH/g |
| Polyetherpolyol A4-1 | Polyetherpolyol der Fa. Covestro Deutschland AG auf Basis von ortho-Toluoldiamin, Ethylenoxid und Propylenoxid mit einer OH-Zahl von 415 mg KOH/g |
| Polyetherpolyol A3-1 | aliphatisches Polyetherpolyol der Fa. Covestro Deutschland AG auf Basis von Propylenglykol, Ethylenoxid und Propylenoxid im Verhältnis 30 %/70 % mit einer OH-Zahl von 28 mg KOH/g |
| TEP | Triethylphosphat der Fa. Lanxess GmbH |
| TCPP | Tris(1-chloro-2-propyl)-phosphat der Fa. Lanxess GmbH |
| Desmodur 44V70L | polymeres Polyisocyanat auf Basis von 4,4'-Diphenylmethandiisocyanat der Fa. Covestro Deutschland AG mit einem NCO-Gehalt von ca. 31,5 Gew.% |
| Tegostab B8443 | Silikonstabilisator der Fa. Evonik Industries AG |
| Desmorapid 1792 | Katalysator der Fa. Covestro Deutschland AG mit 25 Gew.% Kaliumacetat |
| Polycat 520 | Aminkatalysator der Fa. Evonik Industries AG auf Basis von Pentamethyldiethylentriamin und Diethylenglykol |

**Beispiele 1 - 5:-Herstellung von PUR/PIR - Schäumen**

Die Herstellung von PUR/PIR-Hartschäumen auf Basis der in den Tabellen beschriebenen Formulierungen erfolgte mittels Handvermischung im Labormaßstab in Testpäckchen mit Grundfläche 20x20 cm$^2$. Die Polyolkomponente enthaltend die Polyole, Additive und Katalysatoren werden vorgelegt. Kurz vor der Vermischung wird die Polyolkomponente auf 23 - 25 °C temperiert, wohingegen die Polyisocyanatkomponente auf eine konstante Temperatur von 30 - 35 °C gebracht wird. Anschließend wird unter Rühren die Polyisocyanatkomponente zur Polyolmischung gegeben, zu der die zur Erreichung einer Kernrohdichte von ca. 38 - 40 kg/m$^3$ benötigte Menge an Pentan zuvor zugewogen worden ist. Die Mischzeit beträgt 6 sec und die Mischgeschwindigkeit des Pendraulik-Rührers beträgt 4200 min$^{-1}$. Der Schaum wird anschließend für weitere 24 Stunden 20 bei 23 °C gelagert, damit dieser nachreagieren kann.

**Tabelle 1: Zusammensetzung der Komponente A und der Reaktionsmischungen sowie der Eigenschaften der resultierend PUR/PIR-Hartschäume**

| Beispiel | | 1* | 2* | 3 | 4* | 5* |
|---|---|---|---|---|---|---|
| Polyesterpolyol A1-1 | Teile | 56,5 | 56,5 | 56,5 | 66,5 | 66,5 |
| Polyesterpolyol A2-1 | Teile | 1,0 | 2,3 | 1,0 | 2,3 | 1,0 |
| Polyetherpolyol A4-1 | Teile | 5,2 | 5,2 | 5,2 | 5,2 | 5,2 |
| Polyetherpolyol A3-1 | Teile | 10 | 10 | 10 | | |
| TCPP (A8) | Teile | 20,8 | 20,8 | 20,8 | 20,8 | 20,8 |
| TEP (A8) | Teile | 5,2 | 5,2 | 5,2 | 5,2 | 5,2 |
| Wasser (A7) | Teile | 0 | 0,5 | 0,5 | 0,5 | 0,5 |

(fortgesetzt)

| Beispiel | | 1* | 2* | 3 | 4* | 5* |
|---|---|---|---|---|---|---|
| Tegostab B8443 (A10) | Teile | 3,0 | 3,0 | 3,0 | 3,0 | 3,0 |
| Polycat 520 (A9) | Teile | 1,0 | 1,2 | 1,3 | 2,0 | 2,0 |
| Desmorapid 1792 (A9) | Teile | 2,4 | 4,0 | 3,2 | 5,3 | 4,2 |
| Säurezahl Komponente A | mg KOH/g | 2,1 | 3,4 | 2,1 | 3,6 | 2,3 |
| n-Pentan (C) | Teile | 13,1 | 13,3 | 12,7 | 15,0 | 14,2 |
| Desmodur 44V70 L (B) | Teile | 157 | 199 | 188 | 230 | 216 |
| Index | | 330 | 330 | 330 | 330 | 330 |
| Startzeit | s | 12 | 11 | 11 | 12 | 11 |
| Abbindezeit | s | 33 | 34 | 33 | 34 | 33 |
| Schaumdichte | kg/m$^3$ | 41,7 | 38,9 | 40,3 | 39,3 | 39,0 |
| Wärmeleitzahl, initial | mW/m*K | 23,4 | 21,4 | **21,3** | 21,6 | 21,8 |
| Maximale Flammhöhe | mm | 109 | 100 | 101 | 101 | 104 |
| Maximale Steiggeschwindigkeit $v_{max}$ | cmlls | 3,9 | 3,5 | 3,6 | 3,8 | 3,9 |
| Minimale Steiggeschwindigkeit $v_{min}$ | cmlls | 1,4 | 1,2 | 1,5 | 1,4 | 1,4 |
| $\Delta v_{max} - v_{min}$ | cmlls | 2,5 | 2,3 | **2,1** | 2,4 | 2,5 |
| (Beispiele mit * sind nicht erfindungsgemäß) | | | | | | |

Das Beispiel 1 zeigt, dass eine wasserfreie Formulierung A mit niedriger Säurezahl nicht nur zu Schäumen mit nachteiligen Isoliereigenschaften führt, sondern auch im Aufschäumverhalten den am stärksten ausgeprägten PIR Stoß zeigt, ersichtlich an der größten gemessenen maximalen Steiggeschwindigkeit. Beispiel 2 zeigt, dass eine wasserhaltige Formulierung A zwar insgesamt die Wärmeleitfähigkeit der dazugehörigen PUR/PIR-Hartschäume reduziert aber die hohe Säurezahl sich nachteilig in einer größeren Differenz zwischen maximaler und minimaler Steiggeschwindigkeit, d.h. in einem ungleichmäßigen Aufschäumverhalten, äußert. Beispiel 3 demonstriert, dass sich mit einer erfindungsgemäßen Komponente A Schäume mit guten Isolier- und Brandeigenschaften herstellen lassen, die darüber hinaus in einem besonders gleichmäßigen Aufschäumprozess hergestellt werden können.

**Patentansprüche**

1.  Komponente A geeignet zur Umsetzung mit einer Polyisocyanat-Komponente B, welche, bezogen auf das Gesamtgewicht von A, folgende Komponenten enthält:

    A1) > 20 Gew.-% (bevorzugt 45 - 90 Gew.-%, besonders bevorzugt 50 - 80 Gew.-%) eine oder mehrere Polyolverbindungen ausgewählt aus der Gruppe bestehend aus Polyesterpolyolen und / oder Polyetheresterpolyolen mit einer mittleren Hydroxylzahl von 150 mg KOH/g bis ≤ 300 mg KOH/g und einer mittleren Funktionalität von 1,8 bis 2,5, wobei mindestens 50 Gew.-% der Polyolverbindungen A1) ausgewählt sind aus der Gruppe bestehend aus aromatischen Polyesterpolyolen, aromatisch/aliphatischen Polyesterpolyolen, aromatischen Polyetheresterpolyolen und aromatisch/aliphatischen Polyetheresterpolyolen,
    A2) 0,0 - 3,0 Gew.-% (bevorzugt 1,0 - 2,0, insbesondere bevorzugt 1,2 - 2,0 Gew.-%) einer Polyolkomponente bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;
    A3) 5,0 - 15 Gew.-% (bevorzugt 7,0 - 12 Gew.-%) einer Polyolkomponente bestehend aus einem oder mehreren Polyolen ausgewählt aus Polyetherpolyolen mit einer OH-Zahl von 10 bis 80 KOH/g und einer mittleren Funktionalität von ≥ 2,0 bis ≤ 3,0, hergestellt durch Alkoxylierung einer geeigneten Starterkomponente,
    A4) 0,0 - 7,5 Gew.-% (insbesondere bevorzugt 0 - 5 Gew.-%) einer Polyolkomponente bestehend aus einem oder mehreren Polyolen ausgewählt aus Polyetherpolyolen mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid,

A5) optional eine Säurekomponente ausgewählt aus der Gruppe bestehend aus Verbindungen mit einer oder mehreren freien Carbonsäurefunktionen,

A6) optional weitere isocyanatreaktive Verbindungen, insbesondere niedermolekulare Verbindungen (Kettenverlängerer und / oder Vernetzer), welche nicht unter die Definition einer der Komponenten A1 - A5 fallen,

A7) 0,2 - 1,2 Gew.-%, bevorzugt 0,3 - 1,0 Gew.-% Wasser,

A8) > 0 Gew.-%, bevorzugt 5 - 30 Gew.-%, besonders bevorzugt 8 - 25 Gew.-% und insbesondere bevorzugt 10 - 20 Gew.-%, Flammschutzmittel umfassend Tris(2-chlorisopropyl)phosphat (TCPP),

A9) optional Katalysatoren,

A10) optional weitere Hilfsmittel und Zusatzstoffe,

**dadurch gekennzeichnet, dass** A eine mittlere Säurezahl von 1,5 - 3,3 , insbesondere 2 - 3 mg KOH/g aufweist [DIN EN ISO 2114 (November 2006)].

2. Komponente A gemäß Anspruch 1, wobei die Komponente A2 eine mittlere Säurezahl von 10 bis 400 mg KOH/g, bevorzugt von 20 bis 250 mg KOH/g, insbesondere bevorzugt von 50 bis 150 mg KOH/g aufweist.

3. Komponente A gemäß Ansprüchen 1 oder 2, wobei die Flammschutzmittelkomponente A8 aus TCPP besteht.

4. Komponente A gemäß Anspruch 1, 2 oder 3, wobei A3 ausgewählt ist aus einem oder mehreren Polyetherpolyolen mit einer OH-Zahl von 10 bis 80 KOH/g und einer mittleren Funktionalität von $\geq$ 2,0 bis $\leq$ 3,0, hergestellt durch Alkoxylierung einer Starterkomponente ausgewählt aus Ethandiol, 1,2- und 1,3-Propandiol, Diethylenglykol, Dipropylenglykol, 1,4-Butandiol, 1,6-Hexandiol oder einer Mischung daraus, mit Ethylenoxid oder mit einer Mischung aus Ethylenoxid (EO) und Propylenoxid (PO), bevorzugt mit einem EO-Gehalt von 15-70 Gew.% bezogen auf die Gesamtmenge von EO und PO,

5. Komponente A gemäß Anspruch 1, 2, 3 oder 4, wobei die Säurezahl durch Zusatz einer Carbonsäure eingestellt wird.

6. Komponente A gemäß einem der Ansprüche 1 bis 5, **dadurch gekennzeichnet, dass** die Komponente A1) ein Polyesterpolyol enthält, welches aus rezykliertem Polyethylenterephthalat hergestellt ist.

7. Komponente A gemäß einem der Ansprüche 1 bis 6, **dadurch gekennzeichnet, dass** es sich bei A8 um eine Mischung aus TCPP und TEP im Gewichtsverhältnis von 10:1 - 1:1 handelt.

8. Reaktionsgemisch aus einer isocyanatreaktiven Komponente A gemäß einem der Ansprüche 1 bis 7, einer Polyisocyanatkomponente B und einem physikalischen Treibmittel C.

9. Reaktionsgemisch gemäß Anspruch 8, wobei das Reaktionsgemisch eine Kennzahl > 150, insbesondere > 180 aufweist.

10. Reaktionsgemisch gemäß Anspruch 8 oder 9, wobei das Treibmittel C) ausgewählt ist aus einer oder mehreren halogenfreien chemischen und halogenfreien physikalischen Treibmitteln.

11. Verfahren zur Umsetzung eines Reaktionsgemisches aus einer Komponente A gemäß einem der Ansprüche 1 - 10 mit

B einer Polyisocyanatkomponente
in Gegenwart von
C Treibmitteln.

12. Herstellung von PUR/PIR-Hartschaumstoffen umfassend ein Verfahren gemäß Anspruch 11.

13. PUR/PIR-Hartschaumstoff erhältlich durch ein Verfahren gemäß Anspruch 11 oder 12, insbesondere mit einer Rohdichte von $\leq$ 45 kg/m$^3$.

14. Verwendung eines PUR/PIR-Hartschaumstoffes gemäß Anspruch 13 als Dämmplatte, als Isolationsschaumstoff und/oder als Haftvermittler in Verbundelementen, wobei die Verbundelemente eine den PUR/PIR-Hartschaumstoff umfassende Schicht und mindestens eine Deckschicht umfassen.

**15.** Verbundelemente, welche einen Kern aus einem PUR/PIR-Hartschaumstoff gemäß Anspruch 13 und eine oder zwei Deckschichten enthalten, insbesondere Metalldeckschichten.

Europäisches
Patentamt

European
Patent Office

Office européen
des brevets

**EUROPÄISCHER RECHERCHENBERICHT**

Nummer der Anmeldung

EP 24 17 4328

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 957 667 A1 (COVESTRO DEUTSCHLAND AG [DE]) 23. Februar 2022 (2022-02-23) * Absätze [0054], [0053]; Ansprüche 1,7,11,13; Beispiele 6,15-17 * ----- | 1-15 | INV. C08G18/40 C08G18/42 C08G18/76 |
| X | EP 4 230 670 A1 (COVESTRO DEUTSCHLAND AG [DE]) 23. August 2023 (2023-08-23) * Absätze [0104], [0098], [0099], [0087], [0054], [0092], [0098]; Ansprüche 14,11,9,10 * ----- | 1-15 | |

| RECHERCHIERTE SACHGEBIETE (IPC) |
|---|
| C08G |

Der vorliegende Recherchenbericht wurde für alle Patentansprüche erstellt

| Recherchenort | Abschlußdatum der Recherche | Prüfer |
|---|---|---|
| München | 16. September 2024 | Buestrich, Ralf |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**            EP 24 17 4328

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-09-2024

| Im Recherchenbericht angeführtes Patentdokument | Datum der Veröffentlichung | Mitglied(er) der Patentfamilie | Datum der Veröffentlichung |
|---|---|---|---|
| EP 3957667 A1 | 23-02-2022 | EP 3957667 A1<br>EP 4200350 A1<br>WO 2022038056 A1 | 23-02-2022<br>28-06-2023<br>24-02-2022 |
| EP 4230670 A1 | 23-08-2023 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1288239 A
- EP 1421131 A
- WO 2023208626 A1
- WO 2022038056 A